# EUROPEAN PATENT SPECIFICATION

(11) **EP 2 848 110 B1**
(45) Date of publication and mention of the grant of the patent: **28.09.2016**
(21) Application number: 14182495.3
(22) Date of filing: 27.08.2014
(51) Int. Cl.: A01D 43/063

(54) **Material collection system sensor**
Materialsammelsystemsensor
Capteur de système de collecte de matériaux

(30) Priority: 11.09.2013 US 201314023961
(43) Date of publication of application: 18.03.2015
(73) Proprietor: Deere & Company, Moline, IL 61265 (US)
(72) Inventor: Decoster, Michael J, Morrisville, North Carolina 27560 (US); Musser, James W, Cary, North Carolina 27513 (US)
(74) Representative: John Deere GmbH & Co. KG

(56) References cited:
- EP-A1- 1 527 357
- EP-A1- 1 714 542
- EP-A1- 2 250 871
- DE-A1-102005 035 280
- US-A- 4 964 266
- Höhrmann Stephan: "Entwicklung eines Ultraschall-basierten Ortungssystems für Lego Mindstorms Roboter", Studienarbeit, 15 February 2005 (2005-02-15), page 225 pp., XP055158568, Retrieved from the Internet: URL:http://www.informatik.uni-kiel.de/~rai lway/Downloads/hoehrmann1.pdf [retrieved on 2014-12-15]
- MAJCHRZAK J ET AL: "Distance Estimation With a Long-Range Ultrasonic Sensor System", IEEE SENSORS JOURNAL, IEEE SERVICE CENTER, NEW YORK, NY, US, vol. 9, no. 7, 1 July 2009 (2009-07-01), pages 767-773, XP011261519, ISSN: 1530-437X

## Description

This invention relates generally to grass mowing machines, and more specifically to material collection system sensors.

Grass mowing machines may include material collection system sensors that are intended to sense if the collection container is full. For example, some material collection systems include sensors that detect air pressure in the discharge chute as shown in US Patents 5388394, 5605033, 5775077, 5950408, 60734342 and 6622465. These sensors do not provide information about partial fill levels of the collection container.

Other material collection system sensors include pivotable devices that contact grass clippings in the container as shown in US Patents 4969320 and 6272818; electrical conductivity sensors as shown in US Patents 4964266 (considered as generic) and 5960613 and European Patent Application EP2020173A1; sensors that detect resistance to oscillation as shown in US Patent 5832708; light sensors as shown in US Patent 5321939; and weight sensors as shown in US Patent 4981011. These sensors are not repeatable for wet grass clippings and dry grass clippings.

EP 1 714 542 A1 and EP 2 250 871 A1 describe combines with grain tanks and ultrasonic fill level sensors.

There is a need for a material collection system sensor that can accurately detect and provide a partial fill level to the operator before the container is full. There is a need for a material collection system sensor that can provide repeatable performance with wet grass clippings and dry grass clippings. There is a need for a material collection system sensor that can help maximize the amount of material collected in the container, without the discharge chute becoming plugged with grass clippings.

A material collection system sensor accurately detects and provides the partial fill level to the operator before the container is full, and provides repeatable performance with wet grass clippings and dry grass clippings. The material collection system sensor helps maximize the amount of material collected in the container, without the discharge chute becoming plugged with grass clippings.

The material collection system comprises an ultrasonic sensor mounted above the discharge chute exit in the collection container that provides data regarding the distance to a pile of material in the collection container. A visual display provides fill level information correlating to any distance detected by the
ultrasonic sensor.

Fig. 1 is a side view, partially in section, of a lawn and garden tractor with the material collection system sensor according to a first embodiment of the invention.

Fig. 2 is a rear perspective view, partially in section, of a lawn and garden tractor with the material collection system sensor according to a preferred embodiment of the invention.

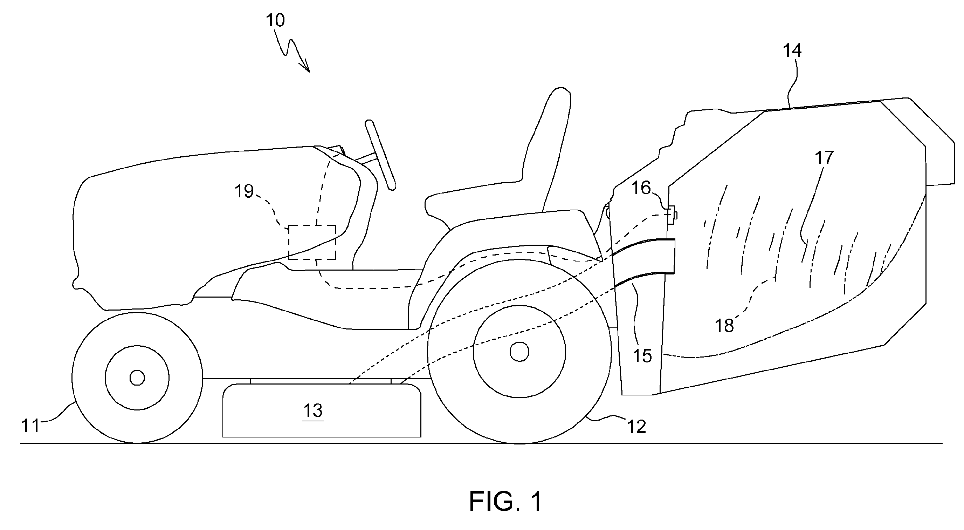

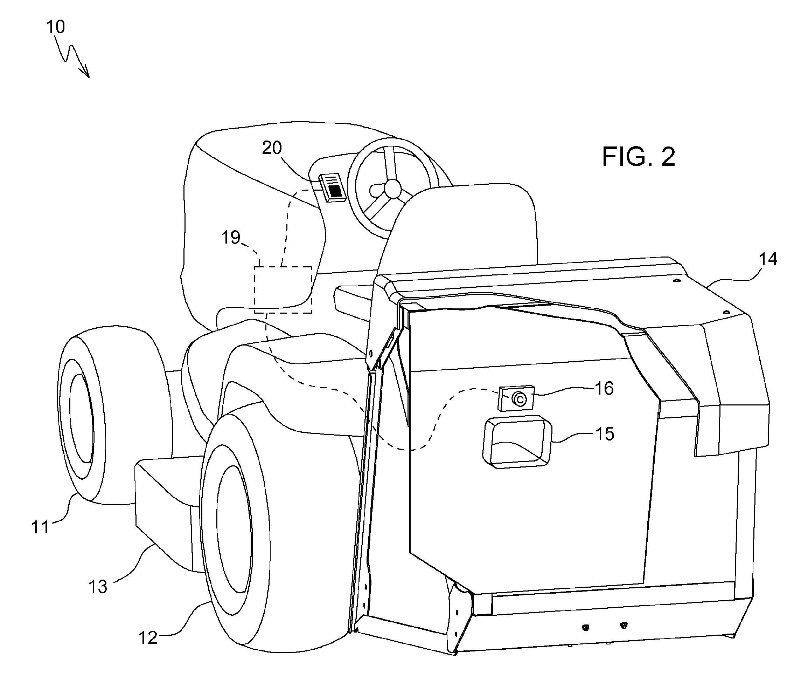

In one embodiment shown in Figs. 1 and 2, lawn and garden tractor 10 may have front wheels 11, rear wheels 12, mower deck 13 suspended from the vehicle frame between the front and rear wheels, and collection container or hopper 14 mounted at the rear of the vehicle. At least one surface, or a portion of one or more surfaces, of collection container 14 may be an air permeable material, such as a mesh or screen. Mower deck 13 may cover one or more cutting blades to cut and propel grass clippings into a material collection system. The material collection system may include discharge chute 15 extending rearwardly between an opening in mower deck 13 and grass collection container 14. Optionally, the material collection system may include an auxiliary blower or fan which may be mounted in a housing adjacent discharge chute 15 to help propel grass clippings through the duct into grass collection container 14.

In one embodiment, material collection system may be a rear discharge, rear collect configuration. For example, the mower deck may have two counter rotating cutting blades which force the grass clippings through a discharge chute located under the operator's seat. The grass clippings may exit the discharge chute and enter the collection container that the operator may tip and dump from a seated position. The material collection system sensor also may be used on lawn and garden tractors having side discharge decks and/or three or more cutting blades. Additionally, the material collection system sensor may be used on other types of grass mowing machines including but not limited to zero turning radius mowers.

In one embodiment shown in Figs. 1 and 2, the material collection system sensor may comprise ultrasonic sensor 16. The ultrasonic sensor may be mounted directly above the exit of discharge chute 15 inside collection container 14. The ultrasonic sensor may provide ultrasonic energy bursts 17 directed and pointed toward a portion of the collection container where grass clippings accumulate. For example, the ultrasonic sensor may be directed at the bottom rear corner of the collection container mounted on the rear of the machine. The ultrasonic sensor then may receive a return signal 18 and determine the distance between the sensor and the grass clippings accumulating in the collection container, based on the time from the energy burst until the return signal.

In one embodiment, if collection container 14 is empty, ultrasonic sensor 16 may provide a maximum distance reading. As grass clippings begin to accumulate in the collection container, there is a shorter distance reading between the ultrasonic sensor and the pile of material. As the pile grows and moves closer to the front and/or top of the collection container, the ultrasonic sensor's distance reading may continue to decrease. When the pile of grass clippings finally approaches the discharge chute's exit near the front of the collection container, directly below the ultrasonic sensor, the distance reading will decrease to a minimal value or zero. The ultrasonic sensor may provide consistent distance readings for most material, including wet or dry grass, as the material piles up close to the sensor, and especially as the collection container fills from about 50% to about 100% full.

In one embodiment, the ultrasonic sensor may provide data to microcontroller or electronic control unit 19 which may use a stored algorithm or table to calculate the distance to the clippings pile, and to correlate the distance data to the fill level of the container. Additionally, the controller may use software filters to filter out unwanted data or noise from the ultrasonic sensor to improve accuracy and reliability of the system. For example, the controller may use software filters to distinguish between the flowing material and the material pile by excluding data that does not meet certain pre-specified criteria.

In one embodiment, controller 19 may provide fill level output to fill level indicator 20 which may be a visual display mounted in the lawn and garden tractor operator station, and/or provide other visual or audible signals of the fill level to the operator. The fill level indicator may include information about any partial fill level of the collection container throughout the entire filling, between empty and full, instead of indicating only if the collection container is full.

In one embodiment, a single ultrasonic sensor may be used, having a single crystal to both transmit and receive ultrasonic energy. For example, the Valeo Gen 5.3 ultrasonic sensor may be used, and/or the ultrasonic sensors described in US Patent 8104351. Alternatively, a plurality of ultrasonic sensors and/or combinations of ultrasonic sensors may be used.

In one embodiment, the ultrasonic sensor may transmit a series of ultrasonic energy bursts during a first time period, followed by a second time period while it transmits no bursts and the controller processes information received back from the sensor and estimates the fill level of the container. For example, the ultrasonic sensor may transmit approximately 30 energy bursts during a first time period such as one second, followed by a second time period such as one second while the electronic controller processes information from the sensor to estimate the fill level. Thus, the ultrasonic sensor may sample the distance approximately 30 times per second and the controller may process this information to estimate and update a display showing the fill level at a frequency of approximately 2 Hz. The frequency may be higher or lower provided that a sufficient number of samples are obtained during the fill time of the collection container, which typically may be about 10 minutes.

In one embodiment, the controller may determine the time interval Δt as the time between the start of each ultrasonic energy burst and the start of each return signal from that burst. The return signal may be characteristic of the location of the clippings pile or back wall of the container. The controller may use each time measurement Δt to determine the distance from the ultrasonic sensor to the clippings pile or back wall, where distance = 0.5 * c * Δt, and c = 343 m/second @ 20 degrees C. As described below, the controller may filter out echoes or other unwanted return signals that may not be characteristic of the clippings pile or back wall.

In one embodiment, the controller may use one or more filters, filtering techniques, or grouping techniques to the return signals from the ultrasonic sensor. For example, the controller may filter out return signals that represent flying or recirculating debris within the collection container, flying or recirculating debris physically contacting the face of the ultrasonic sensor, echoes from multi-surface reflections within the collection container, or any combination of the above.

For example, the controller may filter out return signals with time measurements Δt that are less than a specified minimum such as 230 µs, and/or greater than a specified maximum such as 450 µs. The controller may filter out return signals with Δt under the minimum because those signals may represent blowing material having less reflective energy than the clippings pile. The controller may filter out return signals with Δt above the maximum because they may indicate distances beyond the container's back wall, or multi-surface reflected echoes. Alternatively, the controller may filter out return signals unless a plurality of return signals with the same or similar time measurements Δt are received back for consecutive ultrasonic energy bursts. For example, the controller may filter out return signals unless time measurements Δt representing distances within 40 mm are received back for 3 consecutive ultrasonic energy bursts. Alternatively, for various time intervals, the controller may group together return signals having the same or similar time measurements Δt, and then select the group representing a fill level having the most return signals. For example, during each one second time interval, the controller may determine if more return signals have time measurements Δt representing a fill level such as 20%, than return signals for any other fill level such as 15% or 30%.

## Claims

1. A material collection system for a lawn mower, the material collection system comprising:
a discharge chute (15),
a collection container (14),
an electronic control unit (19),
a sensor (16) operable to provide data to the electronic control unit (19),
a fill level indicator (20) connected to the electronic control unit (19) and displaying information about any fill level of the collection container (14),
**characterized in that** the sensor (16) is mounted in the collection container (14) above the discharge chute (15) and directed to a portion of the collection container (14) where a pile of grass clippings accumulates during operation of the lawn mower,
and that the sensor (16) is an ultrasonic sensor (16) and operable to provide data to the electronic control unit (19) regarding the distance between the pile and the ultrasonic sensor (16);
and that the electronic control unit (19) is operable to filter the data based on certain pre-specified criteria and correlating the distance data to a fill level of the collection container (14).

2. A lawn mower with a material collection system according to claim 1, wherein a mower deck (13) and the collection container (14) are part of a rear discharge rear collection system.

3. The material collection system according to claim 1, wherein the ultrasonic sensor (16) is directed toward a bottom rear corner of the collection container (14).

4. The material collection system according to claim 1 or 3, wherein the ultrasonic sensor (16) provides a series of energy bursts during a first time period, followed by a second time period while the electronic controller unit (19) processes information from the ultrasonic sensor (16) to estimate the fill level.

5. The material collection system according to one of the claims 1 and 3 to 4, wherein the electronic control unit (19) filtering out data from the ultrasonic sensor that is below a minimum time and distance or that is over a maximum time and distance.

6. The material collection system according to one of the claims 1 and 3 to 5, wherein the electronic control unit (19) filters out data from the ultrasonic sensor (16) that is not one of a plurality of consecutive data having the same or similar time and distance measurement.

7. The material collection system according to one of the claims 1 and 3 to 6, wherein the electronic control unit (19) groups together data having the same or similar time and distance measurements and then selects the group with the most data.

## Patentansprüche

1. Materialsammelsystem für einen Rasenmäher, wobei das Materialsammelsystem Folgendes umfasst:
einen Auswurfkanal (15),
einen Sammelbehälter (14),
eine elektronische Steuereinheit (19),
einen Sensor (16), der betreibbar ist, um der elektronischen Steuereinheit (19) Daten zuzuführen,
eine Füllstandanzeige (20), die mit der elektronischen Steuereinheit (19) verbunden ist und Informationen über einen Füllstand des Sammelbehälters (14) anzeigt,
**dadurch gekennzeichnet, dass** der Sensor (16) in dem Sammelbehälter (14) oberhalb des Auswurfkanals (15) angebracht ist und auf einen Abschnitt des Sammelbehälters (14) ausgerichtet ist, in dem sich während des Betriebs des Rasenmähers ein Haufen Grasschnitt ansammelt,
und dass der Sensor (16) ein Ultraschallsensor (16) ist und betreibbar ist, um der elektronischen Steuereinheit (19) Daten bezüglich des Abstands zwischen dem Haufen und dem Ultraschallsensor (16) zuzuführen;
und dass die elektronische Steuereinheit (19) betreibbar ist, um die Daten auf der Basis von bestimmten, vorgegebenen Kriterien zu filtern und die Abstandsdaten zu einem Füllstand des Sammelbehälters (14) in Beziehung zu setzen.

2. Rasenmäher mit einem Materialsammelsystem nach Anspruch 1, wobei ein Mähdeck (13) und der Sammelbehälter (14) Teile eines rückwärtigen Auswurf-/Sammelsystems sind.

3. Materialsammelsystem nach Anspruch 1, wobei der Ultraschallsensor (16) auf eine rückwärtige Bodenecke des Sammelbehälters (14) ausgerichtet ist.

4. Materialsammelsystem nach Anspruch 1 oder 3, wobei der Ultraschallsensor (16) während einer ersten Zeitdauer eine Reihe von Energieimpulspaketen bereitstellt, worauf eine zweite Zeitdauer folgt, während die elektronische Steuereinheit (19) die Informationen von dem Ultraschallsensor (16) verarbeitet, um den Füllstand zu schätzen.

5. Materialsammelsystem nach einem der Ansprüche 1 und 3 bis 4, wobei die elektronische Steuereinheit (19) die Daten von dem Ultraschallsensor ausfiltert, die unter einer minimalen Zeit und einem minimalen Abstand liegen oder die über einer maximalen Zeit und einem maximalen Abstand liegen.

6. Materialsammelsystem nach einem der Ansprüche 1 und 3 bis 5, wobei die elektronische Steuereinheit (19) die Daten von dem Ultraschallsensor (16) ausfiltert, die nicht Daten aus mehreren aufeinanderfolgenden Daten sind, die dieselbe oder eine ähnliche Zeit- und Abstandsmessung aufweisen.

7. Materialsammelsystem nach einem der Ansprüche 1 und 3 bis 6, wobei die elektronische Steuereinheit (19) die Daten, die dieselbe oder eine ähnliche Zeit- und Abstandsmessung aufweisen, zusammen gruppiert und dann die Gruppe mit den meisten Daten auswählt.

## Revendications

1. Système de collecte de matériaux pour tondeuse à gazon, le système de collecte de matériaux comportant :
une goulotte (15) d'évacuation,
un récipient (14) de collecte,
une unité (19) de commande électronique,
un capteur (16) utilisable pour fournir des données à l'unité (19) de commande électronique,
un indicateur (20) de niveau de remplissage relié à l'unité (19) de commande électronique et affichant des informations concernant un éventuel niveau de remplissage du récipient (14) de collecte,
**caractérisé en ce que** le capteur (16) est monté dans le récipient (14) de au-dessus de la goulotte (15) d'évacuation et dirigé vers une partie du récipient (14) de collecte où un tas de tontes de gazon s'accumule pendant le fonctionnement de la tondeuse à gazon,
et **en ce que** le capteur (16) est un capteur ultrasonique (16) et utilisable pour fournir des données à l'unité (19) de commande électronique concernant la distance entre le tas et le capteur ultrasonique (16) ;
et **en ce que** l'unité (19) de commande électronique est utilisable pour filtrer les données d'après certains critères pré-spécifiés et corréler les données de distance avec un niveau de remplissage du récipient (14) de collecte.

2. Tondeuse à gazon dotée d'un système de collecte de matériaux selon la revendication 1, un plateau (13) de tondeuse et le récipient (14) de collecte faisant partie d'un système de collecte arrière à évacuation arrière.

3. Système de collecte de matériaux selon la revendication 1, le capteur ultrasonique (16) étant dirigé vers un coin inférieur arrière du récipient (14) de collecte.

4. Système de collecte de matériaux selon la revendication 1 ou 3, le capteur ultrasonique (16) délivrant une série de bouffées d'énergie au cours d'une première période, suivie d'une deuxième période au cours de laquelle l'unité (19) de commande électronique traite des informations provenant du capteur ultrasonique (16) pour estimer le niveau de remplissage.

5. Système de collecte de matériaux selon l'une des revendications 1 et 3 à 4, l'unité (19) de commande électronique éliminant par filtrage des données en provenance du capteur ultrasonique qui sont inférieures à un temps et à une distance minimaux ou qui sont supérieures à un temps et à une distance maximaux.

6. Système de collecte de matériaux selon l'une des revendications 1 et 3 à 5, l'unité (19) de commande électronique éliminant par filtrage des données en provenance du capteur ultrasonique (16) qui ne figurent pas parmi une pluralité de données consécutives présentant des mesures de temps et de distance identiques ou similaires.

7. Système de collecte de matériaux selon l'une des revendications 1 et 3 à 6, l'unité (19) de commande électronique regroupant ensemble des données présentant des mesures de temps et de distance identiques ou similaires, puis sélectionnant le groupe comprenant le plus de données.
